Europäisches Patentamt

European Patent Office

Office européen des brevets

(19)

(11) Publication number: **0 145 682**
A2

(12) **EUROPEAN PATENT APPLICATION**

(21) Application number: **84850256.3**

(22) Date of filing: **04.09.84**

(51) Int. Cl.⁴: **C 05 G 3/00**

(30) Priority: **23.11.83 FI 834286**

(71) Applicant: **Biolan Oy, P.O. Box 2, SF-27500 Kauttua (FI)**

(43) Date of publication of application: **19.06.85 Bulletin 85/25**

(72) Inventor: **Kariniemi, Pekka, P.O. Box 2, SF-27500 Kauttua (FI)**

(84) Designated Contracting States: **AT BE CH DE FR GB IT LI LU NL SE**

(74) Representative: **Widén, Björn et al, Uppsala Patentbyra Box 9039, S-750 09 Uppsala (SE)**

(54) Method for the production of fertilizer sticks.

(57) An object of the invention is to provide a novel, economic method for the production of natural nutrient sticks, especially natural manure based fertilizer sticks, in a manner that the natural nutrient in question can be used in premises with people around without causing odor problems. According to the invention, manure is sorted out, additives are possibly added therein, the mixture is dried and comminuted by per se known methods and is shaped into sticks by extruding the mixture, while heating it, through a matrix, followed by cutting the obtained fertilizer sticks to a desired maximum length, e.g. a few centimeters, cooled, possibly sorted out and packed.

# METHOD FOR THE PRODUCTION OF FERTILIZER STICKS

The present invention relates to a method set out in the preamble of claim 1 for the production of fertilizer sticks.

The use of animal manure based fertilizers e.g. in households, business premises and generally in premises with people around is restricted by the unpleasant odor caused by such fertilizer. The odor is what prevents spreading of manure based fertilizer e.g. in flower pots and vessels.

An object of the present invention is to eliminate the above drawback. A particular object of the invention is to provide a novel method for the production of fertilizer sticks, whereby the fertilizer sticks produced by this method can be stuck in flower pots or vessels into humus in a manner that the fertilizer sticks do not cause unpleasant scent in the surroundings.

As for the characterizing features of the invention, reference is made to the annexed claims.

The invention is based on preprocessing of natural mnure, especially chicken manure as well as on compressing it into relatively hard rod-shaped sticks by means of a ram extruder, extrusion screw or a collar type of extruder through a matrix so as to make the fertilizer sticks sufficiently firm to be handled by themselves and stuck e.g. into humus.

The invention will now be described in more detail with the aid of work examples and with reference made to the accompanying drawings, in which

fig. 1 is a diagrammatic view of a method of the invention for production of fertilizer sticks from chicken manure, and

fig. 2 shows another method of the invention for production of fertilizer sticks from chicken manure.

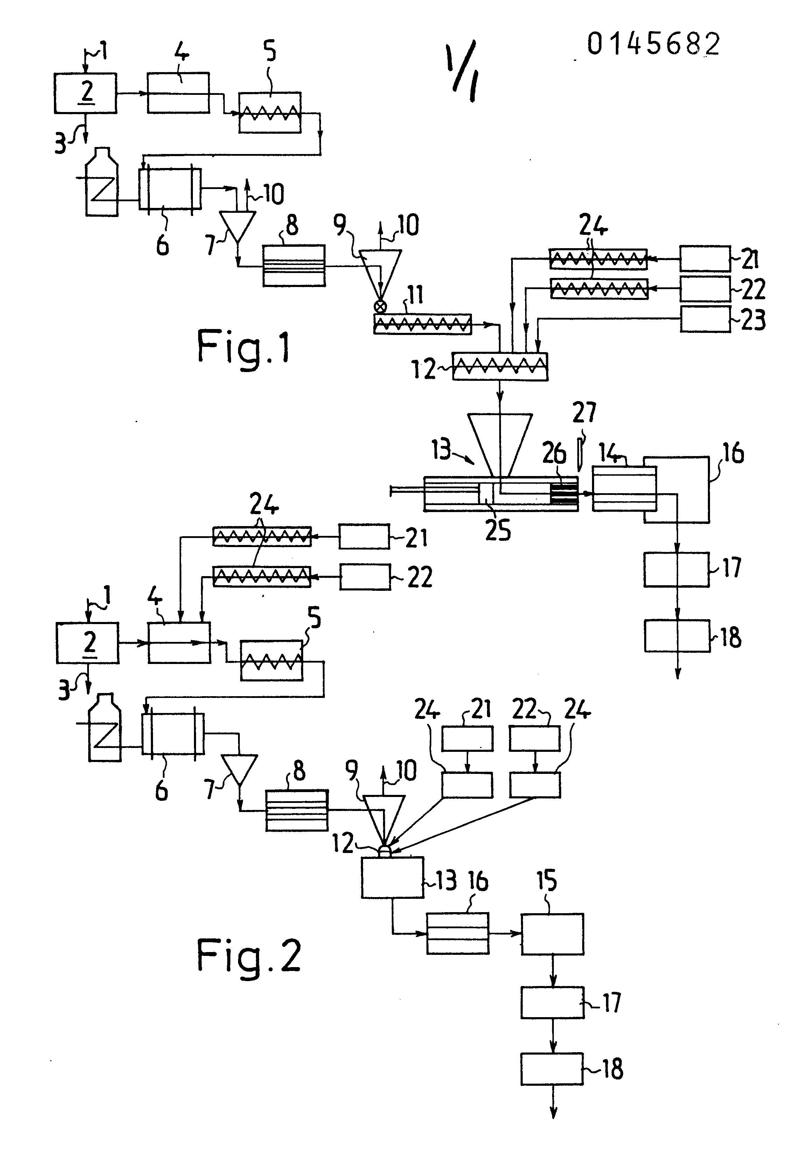

In the alternative processes shown in figs. 1-2, the corresponding process stages are designated with the same reference numerals.

In the process according to the invention shown in fig. 1, chicken manure 1 is sorted out in a flat screen or an oscillating strainer 2, reject 3 is removed and accepted fraction is passed via conveyors 4 and 5 into a drying drum 6 heated by a furnace. From the furnace, the manure mixture is passed on into a cyclone 7 for removing gases 10 and the mixture is passed on into a hammer mill 8 for comminution.

From hammer mill the manure mixture is conveyed by means of an exhauster into a dust separator/cyclone 9, wherein the suction air is filtered and from where the comminuted material is passed through a lcok gate and conveyor 11 into a mixer 12. At the same time, mixer 12 is possibly supplied with activated carbon 21 and powdered seaweed 22 via conveyors 24 as well as water 23. In the mixer, this manure mixture is processed into uniform homogeneous paste which is forwarded to an extruder 13.

A die or ram 25 reciprocating in extruder 13 extrudes at every ram stroke an equal amount of powder mixture through a heated, 35 orifice 55 mm thick matrix die 26. The diameter of matrix orifices is 5 mm and the compressive force of ram is 32 t/16,25 $cm^2$. When extruding through a preheated die, the paste will be heated to a temperature of circa 100$^o$C. After each extrusion, the compacted grains are cut e.g. into 45-55 mm long sticks by means of a cutter 27.

The sticks produced in extruder 13 are forwarded to a dryer 14 in which the obtained sticks in bundles of 35 sticks are dried by means of an infrared emitter upon a stepwise advancing conveyor belt. Drying time is e.g. 10 min. Following the dryer, the fertilizer sticks are cooled in a refrigerator 16 by chilled-air blowing and are finally passed into a package 17 to be wrapped in a bubble package, i.e. in a plastic film, in a substantially airtight contraction plastic package, 35 sticks/package bubble. Finally, the packages are seamed in a seaming device 18 and passed on to store.

In a process as that shown in fig. 1, the additives such as activated carbon 21 and powdered seaweed 22 can be added in the fertilizer mixture after screening 2, e.g. in conveyor 4.

The process shown in fig. 2 corresponds substantially to that shown in fig. 1. In fig. 2, activated carbon 21 and powdered seaweed 22 are added in a conveyor 4 after the screening 2. Drying of the fertilizer mixture in drying drum 6, separation of gases in cyclone 7, and comminution in hammer mill 8 as well as degasification and air filtration in cyclone 9 correspond substantially to the process of fig. 1.

Fig. 2 shows possible addition of additives, such as activated carbon and powdered seaweed, by means of conveyors 24 into a mixer 12 downstream of cyclone 9.

In fig. 2, the comminuted, homogeneous fertilizer mixture is transferred from mixer 12 into a collar type of granulator machine 13 in which the fertilizer mixture is extruded through a matrix into stick-shaped grains or granules which are cut e.g. in the length of 45-55 mm.

The stick-shaped grains obtained from granulator 13 are brittle and they are dried and cooled as a uniform layer in a horizontal refrigerator 16 as well as sorted out in a strainer 15 and packed as in fig. 1 at stages 17 and 18.

The fertilizer sticks produced by the method of the invention from natural products, such as chicken manure and powdered seaweed, have in practice proved very useful indeed. Packed in airtight packages, the fertilizer sticks do not cause any odor problems during handling and selling. When sticking a fertilizer stick produced by the method of this invention into humus, e.g. in a flower pot or vessel or a like underneath humus, said fertilizer stick will be covered by humus and there will be no unpleasant odors. Fertilizer sticks produced by this invention can be used, e.g. in living rooms, office premises etc.

The method can be applied to produce fertilizer sticks not only from chicken manure but also from manure of other animals and other natural substances.

The embodiments of the process of this invention shown in figs. 1-2 are only intended to illustrate the invention which may vary within the scope of the annexed claims without the above work examples by no means restricting applications of the invention.

CLAIMS

1. A method for the production of fertilizer sticks, c h a r a c t e r i z e d in that manure is sorted out, additives are possibly added therein, mixture is dried and comminuted by methods known as such and shaped into sticks by extruding the mixture, while heating it, through a matrix, whereafter the obtained fertilizer sticks are into a desired maximum length, e.g. a few centimeters, cooled, possibly sorted out and packed.

2. A method as set forth in claim 1, c h a r a c t e r i z e d in that said dried and comminuted manure mixture is shaped into sticks by extruding the mixture by means of an extrusion member, such as a ram or screw, through a matrix die.

3. A method as set forth in claim 2, c h a r a c t e r i z e d in that the thickness of said matrix die is in the order of a few centimeters, e.g. 2-10 cm, preferably circa 4-6 cm, and that the die is heated during extrusion in a manner that the temperature of discharging sticks is in the order of circa 100$^{\circ}$C.

4. A method as set forth in claim 2 or 3, c h a r a c t e r i z e d in that water is added in the mixture prior to its extrusion into sticks, and that the sticks are dried after extrusion.

5. A method as set forth in any of claims 1-4, c h a r a c t e r i z e d in that the sticks are dried immediately after extrusion thereof on top of a conveyor belt or a like by means of an IR-emitter.

6. A method as set forth in claim 1, c h a r a c t e r i z e d in that the mixture is shaped into sticks by extruding them through the matrix of a collar type of granulator.

6                    0145682

7. A method as set forth in any of claims 1-6, c h a r a c t e r i z e d in that the sticks are cut into a desired length immediately as said sticks come through a matrix, preferably against a die and/or a matrix.

8. A method as set forth in any of claims 1-7, c h a r a c t e r i z e d in that the sticks are packed inside a plastic film, into a substantially airtight contraction plastic package.

9. A method as set forth in any of claims 1-8, c h a r a c t e r i z e d in that added in manure is activated carbon and/or powdered seaweed possibly prior to drying and/or alternatively after drying followed by a mixing step just before extruding the mixture into sticks.

Fig.1

Fig.2

0145682

1/1